# EUROPÄISCHE PATENTANMELDUNG

(11) **EP 2 090 807 A2**
(43) Veröffentlichungstag der Anmeldung: **19.08.2009**
(21) Anmeldenummer: 09006521.0
(22) Anmeldetag: 13.05.2005
(51) Int. Cl.: F16H 55/30, F16H 7/06, F16G 13/12, B66F 9/08, B66D 3/00

(54) **Taschenkettenrad und Kettentrieb mit einem Taschenkettenrad**

(62) Teilanmeldung aus: 05090137.0
(71) Anmelder: RUD Ketten Rieger & Dietz GmbH u. Co. KG, 73428 Aalen (DE)
(72) Erfinder: Sinz, Rolf, 73540 Heubach (DE); Herzog, Heribert, 73432 Aalen-Ebnat (DE)
(74) Vertreter: Grünecker, Kinkeldey, Stockmair & Schwanhäusser Anwaltssozietät

(57) **Zusammenfassung**

Bei einem Taschenkettenrad (1) für einen Kettentrieb, mit in einer Radumfangrichtung versetzt angeordneten Taschenreihen, die jeweils von durch einen Boden (4) und zwei Querstege (5) begrenzten Taschen (3) für das Taschenkettenrad (1) gegenüber der Radachse unter einem Winkel (α) zwischen 30° und 45° zur Radachse (8) passierende Kettenglieder (10) gebildet sind, werden die Belastungen der Kettenglieder reduziert, indem die Höhe (H) der die Zähne (5) des Rades bildenden Querstege hinreichend klein ist, um einen Kontakt zwischen den achsfernen Längsschenkeln (11) der Kettenglieder (10, 22) und den ihnen zugewandten Flächen (12) der Köpfe der von den Querstegen gebildeten Zähne (5) zu verhindern.

## Beschreibung

Die Erfindung betrifft ein Taschenkettenrad für Kettentriebe, mit in einer Radumfangsrichtung versetzt angeordneten Taschenreihen, die jeweils von durch einen Boden und zwei Querstege begrenzten Taschen für das Taschenkettenrad gegenüber einer Radachse unter einem Winkel α zwischen 30° und 45° passierende Kettenglieder gebildet sind.

Ein Taschenkettenrad der vorstehenden Art ist aus der DE 44 06 623 C1 bekannt. Bei dem bekannten Kettenrad stützen sich die Kettenglieder mit ihren achsnahen Schenkeln an Teilen des Bodens und mit ihren achsfernen Schenkeln auf letzteren zugewandten Flächen der die Zähne des Rades bildenden Querstege ab, wobei durch diese Art der doppelten Abstützung ein Winkel α definiert wird, dessen Größe von der Gesamtzahl der Taschen des Kettenrades abhängt. Als vorteilhaft wird darüber hinaus eine zusätzliche Abstützung der Kettenglieder an Seitenwänden der Taschen erachtet. Anders ausgedrückt bedeutet dies, dass bei dem bekannten Kettenrad die Größe des Winkels α durch die Abmessungen des Kettenrades bestimmt wird, wie dies auch bei anderen einschlägigen, z. B. aus der US 3 415 135 A bekannten Taschenkettenrädern der Fall ist.

In der US 5,533,938 A ist ein Taschenkettenrad beschrieben, dessen Taschenböden mit einer Schräge derart ausgeformt sind, dass sich die der Radachse zugewandten Schenkel der Kettenglieder lediglich in den gekrümmten Bereichen des Überganges ihrer Buge abstützen, wobei die achsfernen Schenkel der Kettenglieder eine zusätzliche Abstützung durch die Auflageflächen der Stege erfahren.

Wie im Rahmen von Untersuchungen festgestellt wurde, kann davon ausgegangen werden, dass die Belastungen der Kettenglieder beim Passieren des Taschenkettenrades nach der DE 44 06 623 C1 geringer sind als beim Passieren von Kettenrädern nach der US 3 415 135 A, wobei der Grund hierfür darin liegen dürfte, dass die Böden der Taschen des Rades nach der DE 44 06 623 C1 im Wesentlichen parallel und die Seitenwände der Taschen dieses Rades im Wesentlichen senkrecht zur Achse des Rades verlaufen, so dass den Kettengliedern hier, im Gegensatz zu den Verhältnissen bei dem Kettenrad nach der US 3 415 135 A, ein gewisser Bewegungsspielraum zur Verfügung steht. Wie sich indes gezeigt hat, lassen sich die Belastungen der Kettenglieder noch weiter reduzieren, wenn man anders als bei den bisher bekannten Lösungen den Winkel α, den die Kettenglieder während des Laufes über das Kettenrad einnehmen, nicht durch die Form des Kettenrades vorgibt, sondern eine Höhe H der die Zähne des Rades bildenden Querstege hinreichend klein ist, um einen Kontakt zwischen den achsfernen Längsschenkeln der Kettenglieder und den ihnen zugewandten Flächen der Köpfe der von den Querstegen gebildeten Zähne zu verhindern.

In der Praxis bedeutet dies, dass die Kettenglieder beim Passieren des erfindungsgemäßen Kettenrades eine ihnen gewissermaßen "von Haus aus angenehme" Winkellage einnehmen und sie keinen aus einer vorgegebenen Zwangslage resultierenden Zusatzbelastungen ausgesetzt sind. Die Kontaktzonen, über die beim erfindungsgemäßen Kettenrad Kräfte zwischen dem Kettenrad und den Kettengliedern der das Kettenrad passierenden Kette übertragen werden, beschränken sich auf die Zahnflanken der die Zähne bildenden Querstege und die gegen diese Zahnflanken anliegenden bogenförmigen Abschnitte der Kettenglieder, wobei den Seitenwänden der Taschen lediglich die Aufgabe zukommt, die Bewegungen des Kettenstranges in Richtung der Radachse in Grenzen zu halten, ohne eine echte Stützfunktion zu übernehmen. Die Seitenwände der Taschen dienen also lediglich dazu, eventuelle Bewegungen der Kettenglieder parallel zur Radachse zu begrenzen. Durch die den Kettengliedern eingeräumte Bewegungsfreiheit wird das Entstehen kritischer Spannungen verhindert.

Gegenstand der Erfindung ist außerdem ein mit einem erfindungsgemäßen Taschenkettenrad ausgestatteter Kettentrieb für ein Hebezeug oder ein Hubwerk, bei dem der Last- und der Losseite des das Taschenkettenrad passierenden Kettenstranges schwenkbare Führungselemente zugeordnet sind, deren Schwenkachsen und die Achse des Kettenrades in jeweils einer Ebene liegen, die senkrecht zur Längsachse des ein- bzw. auslaufenden Kettenstranges steht. Aufgabe der Führungselemente ist es, die Kettenglieder des jeweiligen Kettenstranges vor dem Eintritt in das Taschenkettenrad im Sinne einer Reduzierung unkontrollierter Bewegungen zu stabilisieren und einen sicheren Einlauf des Kettenstranges in das Taschenkettenrad zu gewährleisten.

Weiter Merkmale und Einzelheiten der Erfindung ergeben sich aus den Unteransprüchen und der nachstehen Beschreibung einer in den beigefügten Zeichnungen dargestellten Erfindung. Es zeigen:

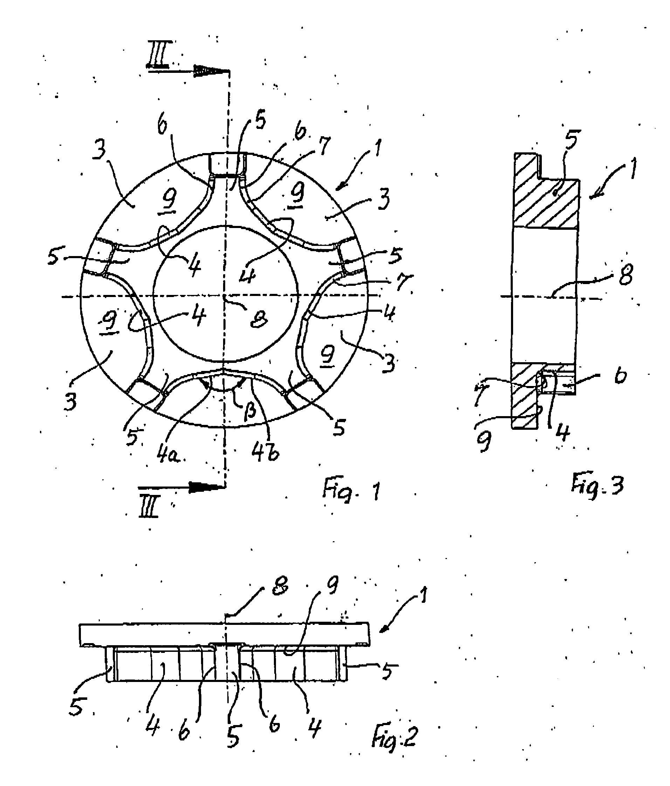

- Fig. 1: die Vorderansicht der Taschen einer Radhälfte eines zweiteiligen Taschenkettenrades,
- Fig. 2: die Draufsicht auf die Radhälfte gemäß Fig. 1,
- Fig. 3: einen Schnitt längs der Linie III - III in Fig. 1,

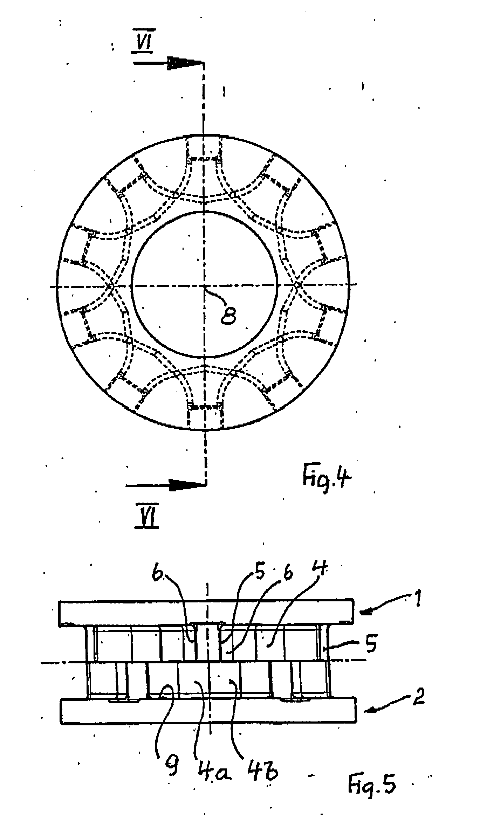

- Fig. 4: die Vorderansicht des aus zwei Teilen gemäß Fig. 1 bis 3 bestehenden Taschenkettenrades,
- Fig. 5: die Draufsicht auf das Taschenkettenrad gemäß Fig. 4,
- Fig. 6: einen Schnitt durch ein Taschenkettenrad für eine Kette, deren Glieder eine innere Breite bₗ von 1,1 d aufweisen,
- Fig. 7: einen Schnitt durch ein Taschenkettenrad für eine Kette, deren Glieder eine innere Breite bₗ von 1,15 d aufweisen,
- Fig. 8: einen Schnitt durch ein Taschenkettenrad für eine Kette, deren Glieder eine innere Breite bₗ von 1,25 d aufweisen,
- Fig. 9: einen Schnitt durch ein Taschenkettenrad für eine Kette, deren Glieder eine innere Breite bᵢ von 1,3 d aufweisen,
- Fig. 10: die Vorderansicht von Teilen eines mit einer Rundstahlkette bestückten Kettentriebes mit einem Taschenkettenrad gemäß den Figuren 1 bis 9,
- Fig. 11: die Draufsicht auf die Teile des Kettentriebes gemäß Fig. 10,
- Fig. 12: die Vorderansicht von Teilen eines modifizierten Kettentriebes,
- Fig. 13: die Vorderansicht von Teilen eines mit einer D-Profilkette bestückten Kettentriebes mit einem Taschenkettenrad gemäß den Figuren 1 bis 9 und
- Fig. 14: die Draufsicht auf die Teile des Kettentriebes gemäß Fig. 13.

In den Figuren sind 1 und 2 die beiden lösbar oder unlösbar miteinander verbindbaren Hälften eines Taschenkettenrades. Jede der beiden Hälften bildet fünf Taschen 3, deren Böden 4 gerade Abschnitte 4a und 4b aufweisen, die einen Winkel β von etwa 160° einschließen, um eine Berührung zwischen den Schweißwulsten der Kettenglieder und den Böden 4 zu verhindern.

Die jeweils aufeinander folgenden Taschen 3 der in Radumfangsrichtung zueinander versetzt angeordneten Taschenreihen sind durch Zähne 5 mit zur Kraftübertragung auf die Kettenglieder eines Kettenstranges dienenden Flanken 6 voneinander getrennt. Die Böden 4 der Taschen 3 und die Flanken 6 der Zähne 5 verlaufen abgesehen von einer zur Vermeidung von Kerbspannungen vorgesehenen kleinen Übergangszone 7 parallel zur Achse 8 des Taschenkettenrades, während die Seitenwände 9 der Taschen 3 senkrecht zur Achse 8 orientiert sind. Der Radius der Übergangszonen sollte in jedem Fall kleiner als der halbe Durchmesser d der Glieder der Kette sein, wobei d im Falle der Verwendung von Rundstahlgliedern der Schenkeldurchmesser und im Falle von D-ProfilGliedern der in den Querschnitt des D-Profiles einbeschriebene Durchmesser der Glieder ist. In der Praxis liegt der Krümmungsradius in der Größenordnung von 0,1 d bis 0,4 d, so dass eine Berührung zwischen den Gliedern der Ketten und den Übergangszonen ausgeschlossen ist.

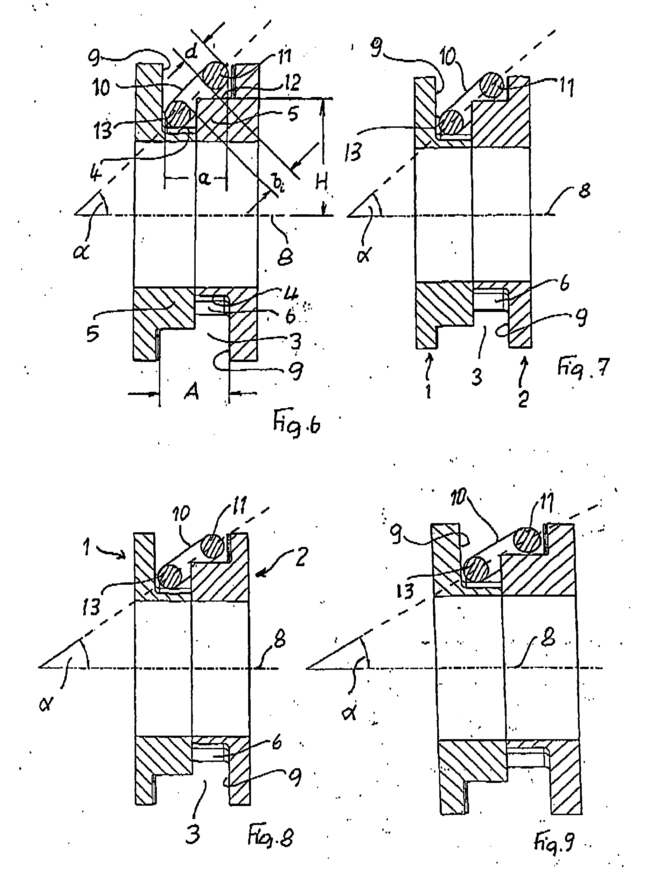

In den Figuren 6 bis 9 ist beispielhaft jeweils anhand eines einzelnen Kettengliedes 10 mit einem Durchmesser d angedeutet, welchen Winkel α die Glieder einer Kette beim Passieren des Taschenkettenrades in Abhängigkeit von ihrem Materialdurchmesser d und von ihrer inneren Breite bᵢ einnehmen. So beträgt der Winkel α im Falle der Figur 6 für eine Kette mit Kettengliedern, deren innere Breite bₗ = 1,1 d beträgt, ca. 45°, während er für Kettenglieder mit inneren Breiten von bᵢ = 1,15 d (Fig. 7), bⱼ = 1,25 d (Fig. 8) und bₗ= 1,3 d (Fig. 9) Werte von ca. 41° (Fig. 7), ca. 35° (Fig. 8) und ca. 30° (Fig. 9) einnimmt. Wie die Figuren 6 bis 9 erkennen lassen, hängt die Schräglage der Kettenglieder bei vorgegebenem Materialdurchmesser d und vorgegebener Zähnezahl des Rades einzig und allein von deren innerer Breite bᵢ der Kettenglieder ab, d. h. sie wird im Gegensatz zur bisher üblichen Praxis nicht von den Abmessungen des Taschenkettenrades, sondern von den Anlagaverhältnissen in den Bugen bzw. Gliedbögen der miteinander verbundenen Kettenglieder bestimmt. Unter normalen Bedingungen kann davon ausgegangen werden, dass die achsfernen Längsschenkel 11 der Kettenglieder 10 nicht nur keinen Kontakt mit den ihnen zugewandten Flächen 12 der Köpfe der Zähne 5 haben, sondern dass darüber hinaus auch keine Berührung zwischen den sich gegenüberliegenden Seitenwänden 9 der Taschen 3 einerseits und sowohl den achsfernen Längsschenkeln 11 als auch den achsnahen Längsschenkeln 13 der Kettenglieder 10 andererseits stattfindet. Der Abstand A der sich gegenüberliegenden Seitenwände 9 ist mit anderen Worten größer als die in Richtung der Achse 8 gemessene äußere Breite a der Kettenglieder 10. In der Praxis sollte A größer als 1,1 a sein.

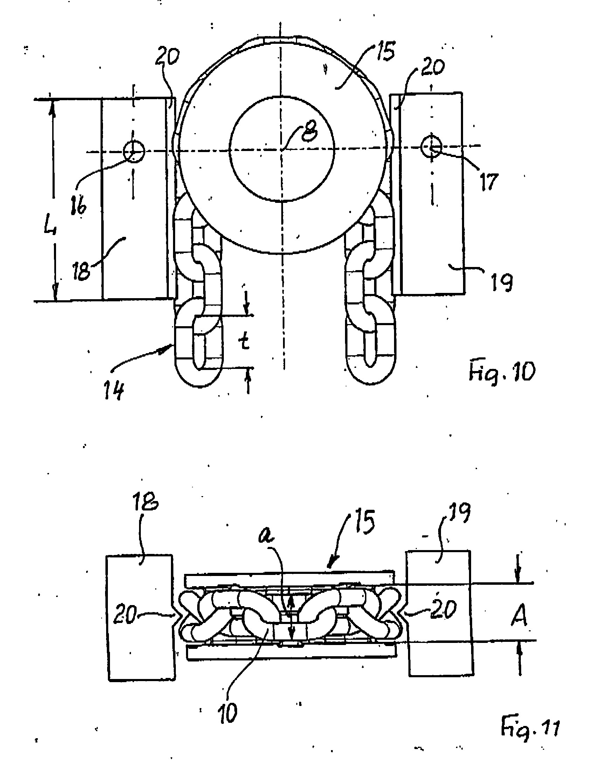

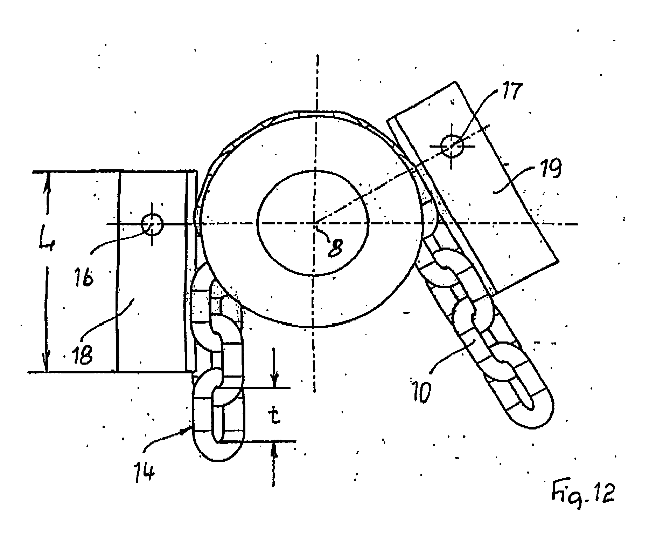

In den Figuren 10 und 11 ist ein von einem Kettenstrang 14 aus Rundstahlgliedern 10 umschlungenes Taschenkettenrad 15 der zuvor beschriebenen Art gezeigt, das einen Teil eines Kettentriebes für ein Hebezeug oder ein Hubwerk bildet. Der Last- und Losseite des Kettenstranges 14 sind zwei um Schwenkachsen 16 und 17 drehbare Führungselemente 18 und 19 zugeordnet, die beide Führungsstege 20 aufweisen, die das Ein- und Auslaufverhalten des Kettenstranges positiv beeinflussen und darüber hinaus, wie an sich bekannt, einem Aufsteigen beim Einlaufen entgegenwirken. Wie der Fig. 10 entnehmbar ist, liegen die Schwenkachsen 16, 17 und die Achse 8 in einer senkrecht zur Blattebene verlaufenden gemeinsamen Ebene. Bei einem schrägen Einlauf des Kettenstranges 14 handelt es sich dabei nicht um eine gemeinsame Ebene für alle drei Achsen 8, 16 und 17, sondern um jeweils eine gemeinsame Ebene der Achsen 16 und 8 bzw. 17 und 8, wie dies der Fig. 12 entnommen werden kann.

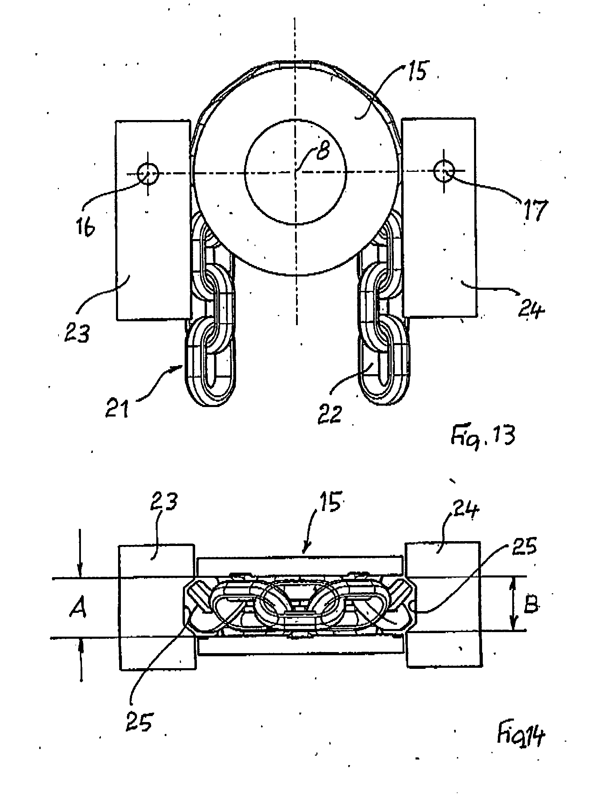

Aufgrund der nicht an die Form der Kettenglieder 10 angepassten Taschen 3 des neuen Kettenrades ist der Austausch eines Kettenstranges 14 aus Rundstahlgliedern 10 gegen einen Kettenstrang 21 aus D-Profilgliedem 22 problemlos möglich. Insbesondere bei Verwendung eines Kettenstranges 21 aus D-Profilgliedern 22 erweist es sich als zweckmäßig - wie in den Figuren 13 und 14 dargestellt - die Führungselemente 18 und 19 durch Führungselemente 23, 24 zu ersetzen, bei denen statt eines Führungssteges 20 eine Führungsnut 25 vorgesehen ist. Die maximale Breite B der Führungsnut 25 ist dabei bewusst kleiner als der Abstand A zwischen den Seitenwänden 9 der Taschen 3 gewählt, um wie im Falle der Lösung gemäß den Figuren 10 bis 12 einen zentrischen Einlauf der Kettenglieder 22 in das Taschenkettenrad 15 zu gewährleisten.

Grundsätzlich ist auch ein Verzicht auf Führungsstege und Führungsnuten möglich. Auch in diesem Fall verhindern die Seitenwände 9 der Taschen 3 parallel zur Radachse 8 verlaufende, seitliche Wanderbewegungen des das Rad passierenden Kettenstranges, ohne die Kettenglieder in ein vom Kettenrad vorgegebenes "Winkelkorsett" zu zwingen.

## Patentansprüche

1. Taschenkettenrad (1) für Kettentriebe, mit in einer Radumfangsrichtung versetzt angeordneten Taschenreihen, die jeweils von durch einen Boden (4) und zwei Querstege (5) begrenzten Taschen (3) für das Taschenkettenrad (1) gegenüber einer Radachse (8) unter einem Winkel (α) zwischen 30° und 45° passierende Kettenglieder (10, 22) gebildet sind, **dadurch gekennzeichnet, dass** die Höhe (H) der die Zähne (5) des Rades bildenden Querstege hinreichend klein ist, um einen Kontakt zwischen den achsfernen Längsschenkeln (11) der Kettenglieder (10, 22) und den ihnen zugewandten Flächen (12) der Köpfe der von den Querstegen gebildeten Zähne (5) zu verhindern.

2. Taschenkettenrad (1) nach Anspruch 1, **dadurch gekennzeichnet, dass** Kontaktzonen zwischen dem Kettenrad (1) und den Kettengliedern (10, 22) der das Kettenrad (1) passierenden Kette auf Zahnflanken (6) der die Zähne (5) bildenden Querstege und die gegen diese Zahnflanken (6) anliegenden bogenförmigen Abschnitte der Kettenglieder (10, 22) beschränkt sind.

3. Taschenkettenrad (1) nach Anspruch 1 oder 2, **dadurch gekennzeichnet, dass** im Betrieb die Querstege (5) in den Kettegliedinnenraum zwischen Bugen und den Längsschenkel (11) der Kettenglieder (10, 22) eingreifen und die achsfernen Längsschenkel (11) von den ihnen zugewandten Köpfen der Querstege beabstandet sind.

4. Taschenkettenrad (1) nach einem der Ansprüche 1 bis 3, **dadurch gekennzeichnet, dass** die Böden (4) der Taschen (3) parallel zur Radachse (8) verlaufen.

5. Taschenkettenrad (1) nach einem der Ansprüche 1 bis 4, **dadurch gekennzeichnet, dass** die Böden (4) gerade Abschnitte (4a, 4b) aufweisen, die einen stumpfen Winkel (β) einschließen, um eine Berührung zwischen Schweißwülsten der Kettenglieder (10, 22) und den Böden (4) zu verhindern.

6. Taschenkettenrad (1) nach Anspruch 5, **dadurch gekennzeichnet, dass** die einander abgewandten Enden der geraden Abschnitte (4a, 4b) in Flanken (6) der Querstege (5) des Rades übergehen.

7. Taschenkettenrad (1) nach einem der oben genannten Ansprüche, **dadurch gekennzeichnet, dass** die Taschen (3) zusätzlich von Seitenwänden (9) begrenzt werden, wobei ein Abstand (A), den die Seitenwände (9) sich gegenüberliegender Taschen (3) voneinander einnehmen, größer ist als eine in Richtung der Achse (8) des Rades (1) gemessene Erstreckung (a) der Kettenglieder (10, 22).

8. Taschenkettenrad (1) nach Anspruch 7, **dadurch gekennzeichnet, dass** die Seitenwände (9) der Taschen (3) senkrecht zur Achse (8) des Rades (1) verlaufen.

9. Taschenkettenrad (1) nach Anspruch 7 oder 8, **dadurch gekennzeichnet, dass** die Flanken (6) der Querstege (5) und die Böden (4) der Taschen (3) über gekrümmte Zonen (7) mit einem Radius in die Seitenwände (9) der Taschen (3) übergehen, der hinreichend klein ist, um eine Berührung zwischen den Übergangszonen (7) und den Kettengliedern (10, 22) auszuschließen.

10. Taschenkettenrad (1) nach Anspruch 9, **dadurch gekennzeichnet, dass** die Übergangszonen (7) zwischen den Flanken (6) der Zähne (5) sowie den Böden (4) der Taschen (3) einerseits und deren Seitenwänden (9) andererseits einen Radius von maximal dem 0,4-fachen eines Materialdurchmessers (d) der Kettenglieder (10, 22) haben.

11. Taschenkettenrad (1) nach einem der Ansprüche 6 bis 10, **dadurch gekennzeichnet, dass** der Abstand (A), den die Seitenwände (9) sich gegenüberliegender Taschen (3) voneinander einnehmen, größer als die 1,1-fache in Richtung der Achse (8) des Rades (1) gemessene Erstreckung (a) der Kettenglieder (10, 22) ist.

12. Taschenkettenrad (1) nach einem der oben genannten Ansprüche, **dadurch gekennzeichnet, dass** der Winkel (α) bei einer vorgegebenen Anzahl von Querstegen (5) des Rades (1) einzig und allein vom Materialdurchmesser (d) und einer inneren Breite (bₗ) der Kettenglieder (10, 22) abhängt.

13. Kettentrieb mit einem Taschenkettenrad nach einem der Ansprüche 1 bis 12, **dadurch gekennzeichnet, dass** der Last- und der Losseite des das Taschenkettenrad (1, 2) passierenden Kettenstranges (14; 21) schwenkbare Führungselemente (18, 19; 23, 24) zugeordnet sind, deren Schwenkachsen (16, 17) und die Achse des Kettenrades (8) in jeweils einer Ebene liegen, die senkrecht zur Längsachse des ein- bzw. auslaufenden Kettenstranges (14; 21) steht.

14. Kettentrieb nach Anspruch 13, **dadurch gekennzeichnet, dass** die Führungselemente (18, 19; 23, 24) Führungsstege (20) oder Führungsnuten (25) aufweisen, deren Länge L mindestens gleich der 2,5-fachen Teilung (t) der Kettenglieder (10; 22) des Kettenstranges (14; 21) ist.

15. Kettentrieb nach Anspruch 12 oder 13, **dadurch gekennzeichnet, dass** die Führungselemente (18, 19; 23, 24) einen unterhalb und einen oberhalb ihrer Schwenkachse (16, 17) gelegenen Abschnitt aufweisen, von denen der untere Abschnitt eine Länge hat, die mindestens gleich der zweifachen Kettenteilung ist.
